# EUROPÄISCHE PATENTSCHRIFT

(11) **EP 1 000 532 B1**
(45) Veröffentlichungstag und Bekanntmachung des Hinweises auf die Patenterteilung: **31.05.2006**
(21) Anmeldenummer: 99122207.6
(22) Anmeldetag: 06.11.1999
(51) Int. Cl.: A01C 3/02, F16C 33/10

(54) **Transportables Kleinrührwerk**
Portable small agitator device
Petit dispositif d'agitation transportable

(30) Priorität: 09.11.1998 DE 19851598
(43) Veröffentlichungstag der Anmeldung: 17.05.2000
(73) Patentinhaber: Brand Gülletechnik GmbH, 49176 Hilter (DE)
(72) Erfinder: Brand, Josef, 49176 Hilter-Eppendorf (DE); Brand, Heinrich, 49176 Hilter-Eppendorf (DE); Brand, Benno, 49084 Osnabrück (DE)
(74) Vertreter: Brandt, Detlef

(56) Entgegenhaltungen:
- CH-A- 408 502
- CH-A- 644 279
- DE-A- 2 420 605
- DE-A- 3 930 576
- DE-U- 9 300 514
- FR-A- 2 668 217
- US-A- 5 358 342

## Beschreibung

Die Erfindung betrifft ein transportables Kleinrührwerk nach dem Oberbegriff des Patentanspruches 1.

Derartige Kleinrührwerke werden vorzugsweise zum Zerkleinern und Verteilen von festen Bestandteilen, wie sie beispielsweise in Gülle und anderen Flüssigkeiten enthalten sind, verwendet. Das Einsatzgebiet umfaßt somit vorrangig Ställe für die Haltung von Tieren oder Kleinklärgruben für private Haushalte.

Bei den beschriebenen Einsatzfällen besteht häufig die Problematik, daß sich die in den Flüssigkeiten enthaltenen festen Bestandteile miteinander verbinden und in der Folge verklumpen, sodaß der Abtransport innerhalb der hierfür vorgesehenen Abflussleitungen oder ein Abpumpen unmöglich wird.

Dieses Problem stellt sich insbesondere bei kleinen oder flachen Gruben und in schmalen Kanälen.

Aus der gattungsbildenden DE-U 2 420 605 ist ein transportables Kleinrührwerk zum Zerkleinern fester Bestandteile in Gülle und anderen Flüssigkeiten mit einem Fahrgestell mit wenigstens zwei Rädern bekannt, bei dem auf einem Tragteil ein Antriebsaggregat angeordnet ist, das eine Verbindung mit einer Antriebswelle aufweist. Endseitig verfügt die Antriebswelle über Rührflügel. Das Antriebsaggregat ist um eine Achse schwenkbar auf dem Tragteil befestigt und mittels einer Arretiervorrichtung in mehreren Schwenkstellungen festlegbar auf dem Tragteil angeordnet.

In dem Gbm 18 31 011 ist eine Höhenverstellung für Jaucherührwagen beschrieben. Ein derartiges transportables Kleinrührwerk weist ein Fahrgestell mit vier Rädern auf. Auf einem Tragteil ist ein Antriebsaggregat angeordnet, das über eine Antriebswelle mit Rührflügeln verfügt und innerhalb des Fahrgestells zusammen mit dem Tragteil in der Höhe verschiebbar angeordnet ist. Zur Höhenverstellung werden zwei parallele Gewindespindeln eingesetzt, die die gesamte Antriebsvorrichtung einschließlich des Rührwerks mit dem Tragteil und der Antriebswelle axial bewegen, wenn zwei Handkurbeln betätigt werden. Das Antriebsaggregat ist um eine etwa horizontale Achse schwenkbar, diese Achse ist Bestandteil einer Führung und nicht auf dem Tragteil, sondern an diesem und in den Führungen des Fahrgestelles angeordnet. Sie wird bei der Höhenverstellung zusammen mit dem Antriebsaggregat und der Antriebswelle verschoben. Bei einem derartigen Kleinrührwerk muß das gesamte Antriebsaggregat einschließlich der recht lang ausfallenden Antriebswelle, an der endseitig eine Art Getriebegehäuse befestigt ist, in dem sich auch die Rührflügel befinden, um diese horizontale Achse verschwenkt werden. Dies erfordert einen erheblichen Kraftaufwand, wobei die Vorrichtung auch nicht in ihrer Größe variierbar ist. Das gesamte Kleinrührwerk ist auf einem vierrädrigen Untergestell in Form eines Wagens montiert, was bei dieser Lösung auch erforderlich ist, da infolge seiner Baugröße ein Transport des Kleinrührwerkes ansonsten nicht möglich wäre.
Durch das hohe Gewicht der Antriebseinheit sind zur Höhenverstellung kostenintensive Gewindespindeln erforderlich. Die Handhabung gestaltet sich schwierig, weil mehrere Handkurbeln betätigt werden müssen, um einen Hub zu erreichen.

Aus Gbm 93 00 514.8 ist ferner ein transportables Kleinrührwerk bekannt, das neben einem Fahrgestell auf zwei Rädern auch ein Tragteil aufweist, auf dem ein Antriebsaggregat angeordnet ist. Als Antriebsaggregat wurde hierbei ein Elektromotor verwendet. Das Antriebsaggregat weist ferner eine Antriebswelle auf, an der endseitig ein Rührflügel befestigt ist. Die Rotorflügel werden während des Betriebes aufgrund der Fliehkraft um ihre Befestigungsachse verschwenkt sodaß sich die Rührflügel erst nach Inbetriebnahme des Kleinrührwerkes zu einem Rotor entfalten. Ferner sind aus der Schrift zwei U-förmige Pfosten bekannt, zwischen denen Holme der Rahmenkonstruktion längsverschieblich, also in der Höhe veränderlich, geführt werden. Die stillstehenden, vertikal angeordneten Rührflügel werden durch die Spaltenroste in den Güllekanal geschoben, wo sie sich nach dem Einschalten des Gerätes in der zuvor beschriebenen Weise entfalten und somit das Zerkleinern der festen Bestandteile in der Gülle ermöglichen.
Nachteilig bei dieser Lösung ist jedoch, daß die Rührflügel nur in einer Richtung eingesetzt werden können. Es ist demnach nicht möglich, eine gerichtete Strömung zu erzeugen, die innerhalb des Kanals gleichzeitig die Abführung der zerkleinerten Bestandteile zusammen mit der Flüssigkeit erleichtert. Darüber hinaus besteht bei der bekannten Ausführung der Nachteil, daß die Räder ungesichert sind, sodaß die Gefahr besteht, daß sich die Vorrichtung ungewollt selbständig bewegt, kippt oder verrutscht, was letztlich zu einer Zerstörung der Rührflügel durch Verklemmen im Kanal oder zwischen den Spaltenrosten führen kann und damit auch eine Unfallgefahr in sich birgt.

Der Erfindung liegt die technische Problemstellung zugrunde, ein transportables Kleinrührwerk zu schaffen, daß ein Zerkleinern fester Bestandteile in Flüssigkeiten ermöglicht und dabei eine gerichtete Strömung innerhalb der Flüssigkeit erzeugt, die sicher ist und kostengünstig herstellbar sein sollte. Ferner sollte das Kleinrührwerk im ungenutzten Zustand auf Mindestmaße reduzierbar sein.

Gelöst wird diese Aufgabenstellung mit den kennzeichnenden Merkmalen des Patentanspruches 1.
Danach ist bei einem erfindungsgemäßen, transportablen Kleinrührwerk das Antriebsaggregat um eine Achse schwenkbar auf dem Tragteil und mit diesem verschiebbar in dem Fahrgestell aufgenommen. Das Antriebsaggregat ist ferner mittels einer Arretiervorrichtung in mehreren Schwenkstellungen festlegbar auf dem Tragteil angeordnet und der Schwenkwinkel der Arretiervorrichtung kann zwischen 0° und 360° betragen.

Diese Ausführung hat den Vorteil, daß nicht nur eine Höhenverschiebung des gesamten Antriebsaggregates möglich ist, es wird auch erreicht, daß dieses auf dem Tragteil beliebig verschwenkt und in jeder Stellung festgelegt werden kann, was die Transportierbarkeit der Vorrichtung erheblich erleichtert. Durch die zusätzliche Integration der Schwenkfunktion kann beispielsweise eine gerichtete Strömung in einem Güllekanal erzeugt werden, die das Abführen der Flüssigkeit fördert und erleichtert. Somit wird in einfacher Weise sowohl das Zerkleinern fester Bestandteile in Flüssigkeiten, als auch ein Verquirlen der Flüssigkeit ermöglicht.

Ausgestaltungen der Erfindung sind Gegenstand der Unteransprüche.

So kann das Fahrgestell in einer Ausgestaltung der Erfindung als ein in sich geschlossenes Rahmenprofil ausgeführt werden. Dadurch wird eine erhebliche Stabilität erreicht. Zwei zueinander parallele Rahmenprofile sind dabei jeweils als Führungen ausgeführt, in denen das Tragteil in der Höhe verschiebbar ist. Die Führungen können erfindungsgemäß beispielsweise U-Profile, Schwalbenschwanzführungen, Schlitzführungen oder auch T-Profile sein. Andere bekannte Ausführungen sind selbstverständlich ebnenfalls einsetzbar. Bei Verwendung von T-Profilen umgreift das Tragteil die Führung klauenartig, während bei Nutzung von U-Profilen, Schwalbenschwanzführungen oder Schlitzführungen das Tragteil rahmenprofilseitig in die Führung eingesetzt wird.

Um der gesamten Vorrichtung eine ausreichende Stabilität im Einsatzfall zu geben, sind weiterhin wenigstens zwei Stützholme vorgesehen, die auf der den Rädern gegenüberliegenden Seite angeordnet sind. Diese Stützholme bilden beispielsweise ein gleichseitiges Dreieck, das bedeutet, daß ihre Enden vorteilhafter Weise einen stumpfen Winkel bilden, wobei sich der Scheitelpunkt am Fahrgestell befindet. Das auf dem Tragteil angeordnete Antriebsaggregat ist erfindungsgemäß mittels einer Arretiervorrichtung in mehreren Schwenkstellungen festlegbar auf dem Tragteil befestigt. Diese Festlegung in mehreren Schwenkstellungen verhindert ein ansonsten erforderlich werdendes Festhalten in einer definierten Stellung. Somit wurde die Bedienungsfreundlichkeit des Kleinrührwerkes gegenüber bekannten Vorrichtungen erheblich verbessert.

Eine weitere Ausgestaltung der Erfindung sieht darüber hinaus vor, daß die Arretiervorrichtung aus einer auf dem Tragteil drehbar befestigten Platte besteht, in deren Randbereich eine Kurvenkontur mit den Schwenkstellungen zugeordneten Ausnehmungen eingeformt ist, in die ein Arretierglied eingreift. Das Arretierglied kann dabei auch gänzlich außer Kraft gesetzt werden, sodaß ein permanentes Hin- und Herschwenken des Antriebsaggregates durch den Bediener möglich wird.
Unter einem Arretierglied wird erfindungsgemäß jede Vorrichtung verstanden, die eine Festlegung der drehbaren Platte in mehreren Positionen ermöglicht. So kann das Arretierglied eine Feder-Kugel-Raste, ein Klemmhebel oder ein Gewindebolzen sein, der in einem in Plattenrandnähe eingebrachten oder angebrachten Gewinde schraubbar ist.

Der Schwenkwinkel des Antriebsaggregates beträgt erfindungsgemäß bis zu 360°. Somit könnte das Antriebsaggregat zur Transporterleichterung beispielsweise um 180° verschwenkt werden, um es anschließend mit dem Tragteil in die unterste, radnahe Position zu verbringen. Dadurch wird eine vorteilhafte Gewichtsverteilung erreicht und das gesamte Kleinrührwerk sehr kompakt.

Um den Transport des Kleinrührwerkes noch weiter zu erleichtern, sollten vorteilhafter Weise die Stützholme teleskopierbar sein. Die Teleskopierbarkeit kann in an sich bekannter Weise durch ineinanderschiebbare, komplementäre Profile erfolgen. Diese können über eine Verliersicherung miteinander verbunden sein oder beispielsweise durch Steckverbindungen bis auf die notwendige Länge ergänzt werden.

Weitere vorteilhafte Ausbildungen der Erfindung bestehen darin, daß das transportable Kleinrührwerk wenigstens einen, vorzugsweise jedoch zwei Handgriffe aufweist, die zudem ebenfalls teleskopierbar sein können. Weiterhin ist es von besonderem Vorteil, die Handgriffe höhenverstellbar und um eine Achse schwenkbar sowie in mehreren Stellungen in dem Rahmenprofil festlegbar auszuführen. Dadurch wird einerseits eine Anpassung an verschiedene Körpergrößen der Bediener und andererseits eine vereinfachte Transportierbarkeit des Kleinrührwerkes ermöglicht.

Die Verschwenkbarkeit der Handgriffe wird erfindungsgemäß beispielsweise dadurch erreicht, daß diese jeweils in einer Manschette, die aus zwei parallelen Blechen bestehen kann, schwenkbar aufgenommen sind. Diese Manschette weist der Höheneinstellung beziehungsweise den Schwenkstellungen entsprechende Bohrungen auf. Die Achse, um welche die Handgriffe verschwenkt werden, kann im einfachsten Falle aus einem Bolzen bestehen, der die Bohrungen in der Manschette sowie den Handgriff durchgreift und endseitig eine Verliersicherung aufweist. Als Verliersicherung können im Maschinenbau bekannte Einrichtungen verwendet werden, wie Kronenmuttern mit Splinten, selbstsichernde Muttern, Sperrzahnmuttern und andere.

Eine weitere sehr wesentliche Ausgestaltung der Erfindung sieht eine Kopplung der Handgriffe mit einer auf die Räder wirkenden, lösbaren Blockiereinrichtung vor. Diese Blockiereinrichtung ist dabei beispielsweise als eine Hebelmechanik zu verstehen, die aus einer mit den Handgriffen gekoppelten Schubstange und einer radseitig an der Schubstange befestigten und auf die Räder wirkenden Bremsstange besteht. Zwischen der Bremsstange und dem Fahrgestell wirkt eine Zugfeder, sodaß die Bremsstange permanent auf die Räder wirkt, das heißt, an diese gepresst wird. Die Bremsstange ist verschieblich in einer Bremsstangenführung geführt. Um das Kleinrührwerk zu bewegen, muß der Bediener dieses an den Handgriffen anfassen und zu sich heran ziehen, sodaß es in eine geneigte Stellung gebracht wird. Dabei wirkt die Blockierung der Räder durch die aufliegende Bremsstange unterstützend. Anschließend wird die eingestellte Position der Handgriffe gelöst, was unterstützt durch das Eigengewicht des Kleinrührwerkes eine axiale Bewegung der Schubstange hervorruft. Dadurch werden die Räder freigegeben, und das Kleinrührwerk ist transportierbar.
Die Bremsstangenführung kann im einfachsten Fall aus einem Schlitz bestehen, in dem die Bremsstange gleitend beweglich geführt ist.
Wesentlich ist jedoch, daß die Bremsstange im gelösten Zustand gegen einen Anschlag gezogen wird. Dadurch wird gleichzeitig eine Begrenzung der Schwenkbewegung der Handgriffe erreicht. Der Anschlag kann dabei das obere Ende des zuvor genannten Schlitzes sein.

Um die Höhenverstellung des Antriebsaggregates zu erleichtern, wird vorgeschlagen, eine an dem Fahrgestell befestigte Hubvorrichtung einzusetzen, die die Bewegung des Tragteiles unterstützt. Als Hubvorrichtung kann erfindungsgemäß eine Seilwinde oder eine durch die Kraft einer Feder, durch eine Hydraulik oder durch eine Pneumatik unterstützte Hubmechanik eingesetzt werden.

Darüber hinaus kann es bei einem erfindungsgemäßen transportablen Kleinrührwerk zweckmäßig sein, die Antriebswelle schwimmend zu lagern, um so beispielsweise eine Kühlung der Lagerstelle im rührflügelnahen Bereich zu ermöglichen und darüber hinaus Fremdkörper, wie Verunreinigungen, aus der Lagerstelle herauszuspülen. Durch die schwimmende Lagerung, die aus einem Lagergehäuse mit einem Spülmittelanschluß und einem Spülmittelkanal bestehen kann, wird ferner eine Reibungsreduzierung erreicht, sodaß der Verschleiß des Kleinrührwerkes herabgesetzt ist.

Gemäß einer Ausgestaltung der schwimmenden Lagerung könnte der Spülmittelkanal wenigstens eine mit der die Antriebswelle aufnehmenden Lagerbohrung verbundene Austrittsöffnung und wenigstens eine weitere, freie, in Richtung des Rührflügels gerichtete, Austrittsöffnung aufweisen. Dadurch kann einerseits die Gülle verflüssigt und andererseits die Lagerstelle mit einem Spülmedium durchspült werden, was die zuvor erwähnten Vorteile aufweist.

In Weiterführung des Erfindungsgedankens wird darüber hinaus vorgeschlagen, daß der Rührflügel aus mindestens einem starr mit der Antriebswelle verbundenen Rührflügelblatt besteht und an der Antriebswelle eine Vorrichtung zur Arretierung des Rührflügels in wenigstens einer Stellung vorhanden ist, wobei die Vorrichtung zur Arretierung des Rührflügels aus einem mit der Antriebswelle gekoppelten Nockenelement und einem mit diesem zusammenwirkenden Arretierhebel besteht.

Das Nockenelement sollte dabei vorteilhafter Weise mittels einer Reduzierhülse auf der Antriebswelle befestigt und in einer Ebene mit dem Rührflügel angeordnet sein sowie eine annähernd ellipsenförmige Gestalt aufweisen.
Der insgesamt drehbar und axial bewegliche Arretierhebel besteht gemäß dieser Ausgestaltung der Erfindung aus einem Handgriff, einer von dem Arretierhebel durchsetzten Scheibe, einer sich einerseits gegen die Scheibe und andererseits im Innern einer Hülse abstützenden Feder, wobei die Hülse mittels einer Sicherungsmutter an dem Arretierhebel festgelegt ist. An dem Arretierhebel kann ein zusätzlicher Hebelarm vorgesehen werden, der an mindestens einer Stützfläche wenigstens zwei Stellungen des Arretierhebels definiert. Während der Verstellbewegung des Arretierhebls gleitet die Scheibe dabei entlang einer Kurvenbahn.

Selbstverständlich können die vorstehend genannten und die nachfolgend noch zu erläuternden Merkmale der Erfindung nicht nur in der jeweils angegebenen Kombination, sondern auch in anderen Kombinationen oder in Alleinstellung verwendet werden, ohne dabei den Rahmen der Erfindung zu verlassen.

Zwei bevorzugte Ausführungsbeispiele der Erfindung werden nachstehend unter Bezugnahme auf die Zeichnungen näher erläutert. Es zeigen:
- Figuren 1 bis 3:: Ein erstes erfindungsgemäßes, transportables Kleinrührwerk in drei Ansichten,
- Figuren 4 bis 6:: eine weitere Ausführungsform eines erfindungsgemäßen, transportablen Kleinrührwerkes in drei Ansichten,
- Figur 7:: ausschnittsweise eine mögliche Ausführung einer erfindungsgemäßen Arretiervorrichtung,
- Figur 8:: ausschnittsweise eine schematische Darstellung der Handgriffbefestigung,
- Figur 9:: ausschnittsweise eine mögliche Höhenverstellbarkeit der Schubstange am Handgriff,
- Figur 10:: eine schwimmende Lagerung der Antriebswelle im Schnitt,Figur 11:
- Figur 11:: eine erste Stellung einer Rührflügelarretierung im Schnitt
und
- Figur 12:: eine zweite Stellung einer Rührflügelarretierung im Schnitt.

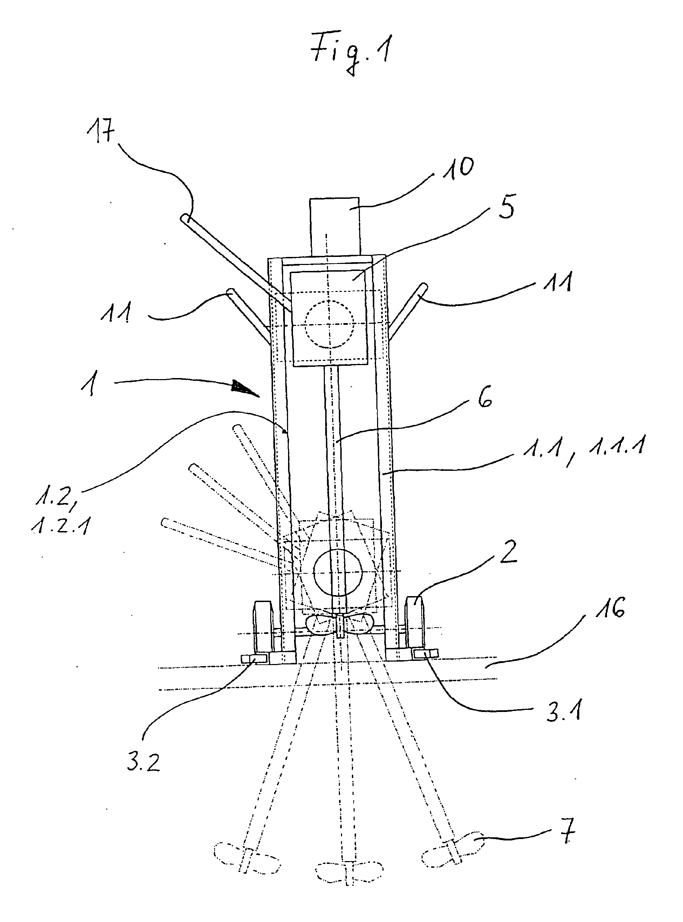

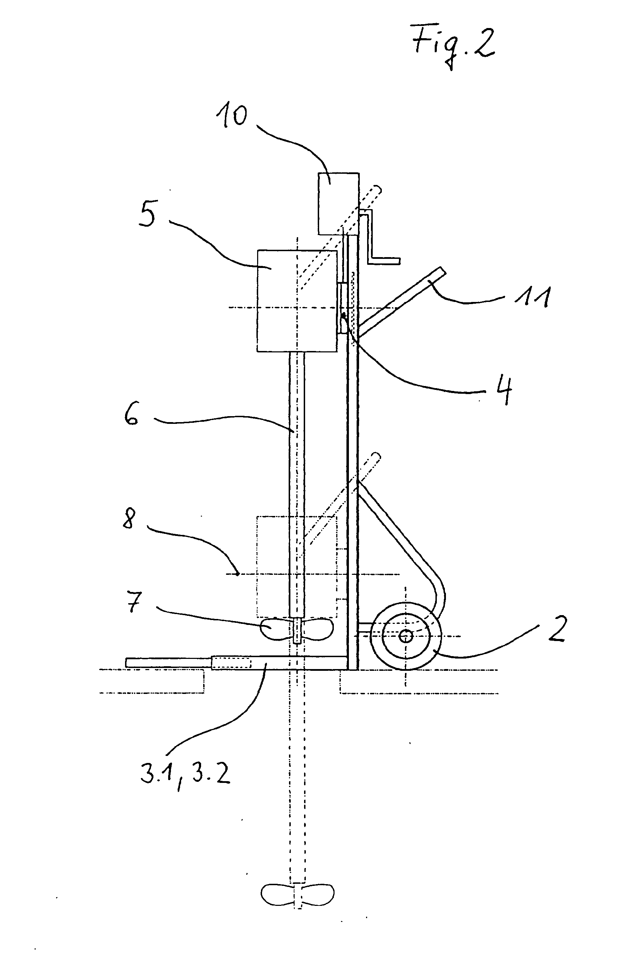

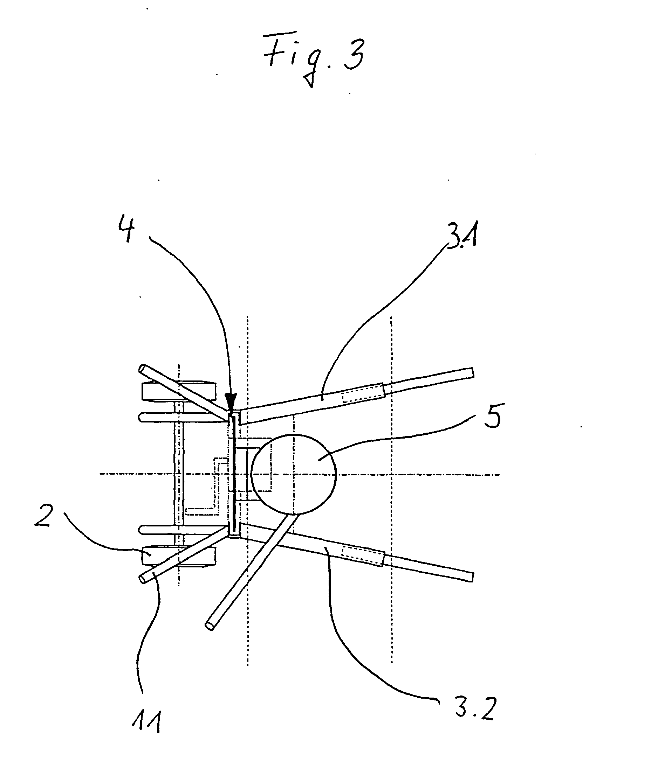

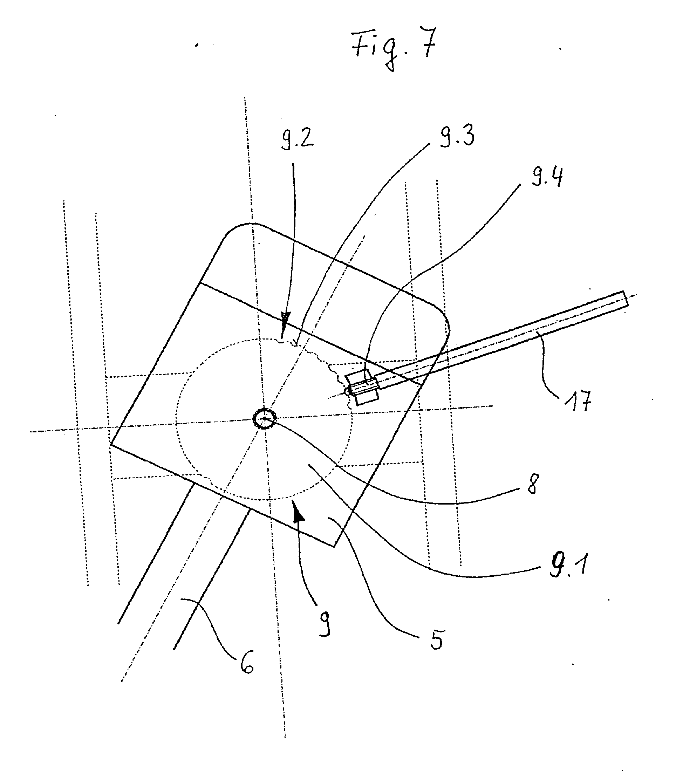

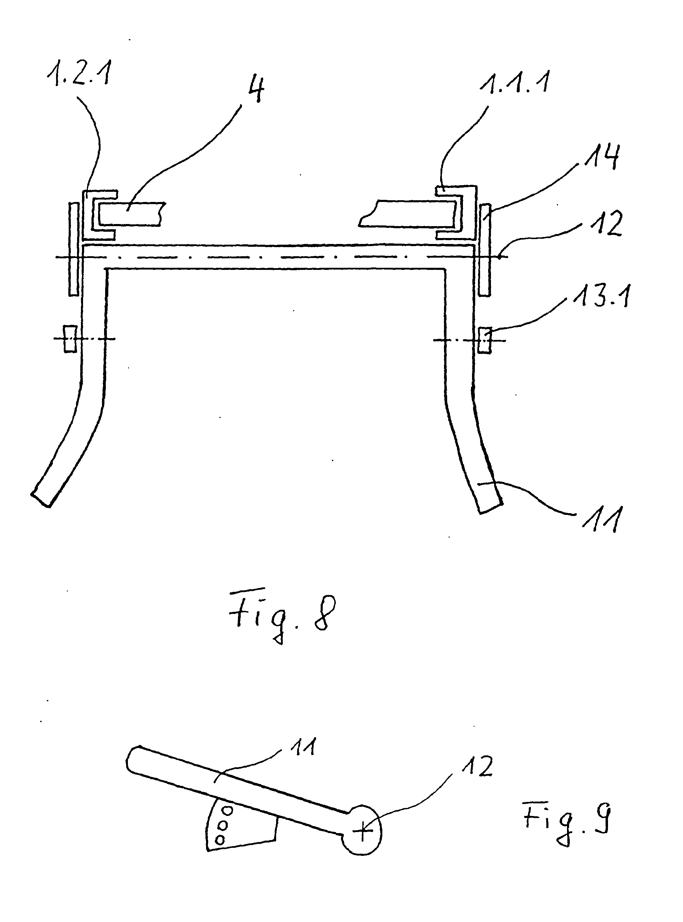

Die in den Figuren 1 bis 3 dargestellte Ausführungsform der Erfindung ist ein sehr einfaches, transportables Kleinrührwerk zum Zerkleinern von festen Bestandteilen in Gülle und anderen Flüssigkeiten. Dieses besteht aus einem Fahrgestell (1) mit wenigstens zwei Rädern (2), einem Tragteil (4), einem auf dem Tragteil angeordneten Antriebsaggregat (5) mit einer Antriebswelle (6), die endseitig wenigstens einen Rührflügel (7) aufweist, wobei das Antriebsaggregat (5) um eine Achse (8) schwenkbar auf dem Tragteil (4) und mit dem Tragteil (4) verschiebbar in dem Fahrgestell (1) aufgenommen ist. Der Rührflügel (7) ist propellerartig ausgeführt und kann in an sich bekannter Weise auffalten, wenn er in eine Drehbewegung versetzt wird. Die etwa 1 m lange Antriebswelle kann ihrerseits in einem in den Figuren nicht dargestellten Schutzrohr aufgenommen sein, wobei ein nach außen abgedichtetes Wälzlager am Ende des Schutzrohres für eine ausreichende Führung der Antriebswelle sorgt. Als Antriebsaggregat wird ein Elektromotor mit einer Leistung von circa 6 kW eingesetzt. An dem Fahrgestell (1) sind ferner zwei Handgriffe (11) angebracht.
Das Fahrgestell (1) ist in sich geschlossen und weist zwei zueinander parallele Rahmenprofile (1.1, 1.2) auf, die jeweils Führungen (1.1.1, 1.2.1) für das darin verschiebbare Tragteil (4) bilden. Bei der dargestellten Ausführung einer erfindungsgemäßen Lösung sind die Führungen U-Profile. Dies ist sehr anschaulich in der Darstellung der Figur 8 erkennbar. In der Figur 8 ist die Manschette (14) ein einfaches Blech, das höhenversetzt mehrere Bohrungen aufweist und von einem die Achse (12) bildenden Bolzen durchgriffen wird. Dadurch kann in besonders einfacher Weise eine Höhenverstellbarkeit und Schwenkbarkeit der Handgriffe (11) erreicht werden.
Zwei auf der den Rädern gegenüberliegenden Seite angeordnete Stützholme (3.1, 3.2) sind teleskopierbar ausgeführt, sodaß insgesamt ein fester Stand des gesamten Kleinrührwerkes erreicht wird.
Das auf dem Tragteil (4) angeordnete Antriebsaggregat (5) ist ferner mittels einer Arretiervorrichtung (9) in mehreren Schwenkstellungen festlegbar auf dem Tragteil (4) befestigt, wie dies insbesondere aus der Darstellung in der Figur 7 hervorgeht. Diese Arretiervorrichtung (9) besteht aus einer auf dem Tragteil (4) drehbar befestigten Platte (9.1), in deren Randbereich eine Kurvenkontur (9.2) mit den Schwenkstellungen zugeordneten Ausnehmungen (9.3) eingeformt ist, in die ein Arretierglied (9.4) eingreift. Als Arretierglied wird vorliegend ein am Ende des Verstellhebels (17) angebrachter Gewindebolzen eingesetzt, der durch eine am Antriebsaggregat angeschweißte Mutter geschraubt wird, bis sein Ende in die entsprechende Ausnehmung (9.3) eingreift und so die Arretiervorrichtung (9) in ihrer Position festlegt. Der Verstellgriff (17) an dem Antriebsaggregat (5) erleichtert die Verschwenkbewegung des Antriebsaggregates (5) um die Achse (8).

Das erfindungsgemäße Kleinrührwerk wird zunächst auf den Lattenrosten (16) des Stalles abgestellt. Anschließend wird das Antriebsaggregat (5) zusammen mit dem Tragteil (4) nach unten verschoben, sodaß der Rührflügel (7) unterhalb der Lattenroste (16) in die verdickte Flüssigkeit eintaucht. Das Antriebsaggregat kann gestartet werden, und es ist nun gleichzeitig dessen Verschwenken um die Achse (8) beziehungsweise eine Festlegung des Antriebsaggregates in einer beliebigen Schwenkstellung möglich.
Je nach Rührflügelausführung kann es erforderlich werden, einen Lattenrost zu entfernen, um den Rührflügel einführen zu können. Die Stützholme wirken hierbei insbesondere durch ihre Teleskopierbarkeit stabilitätsfördernd für die gesamte Vorrichtung.

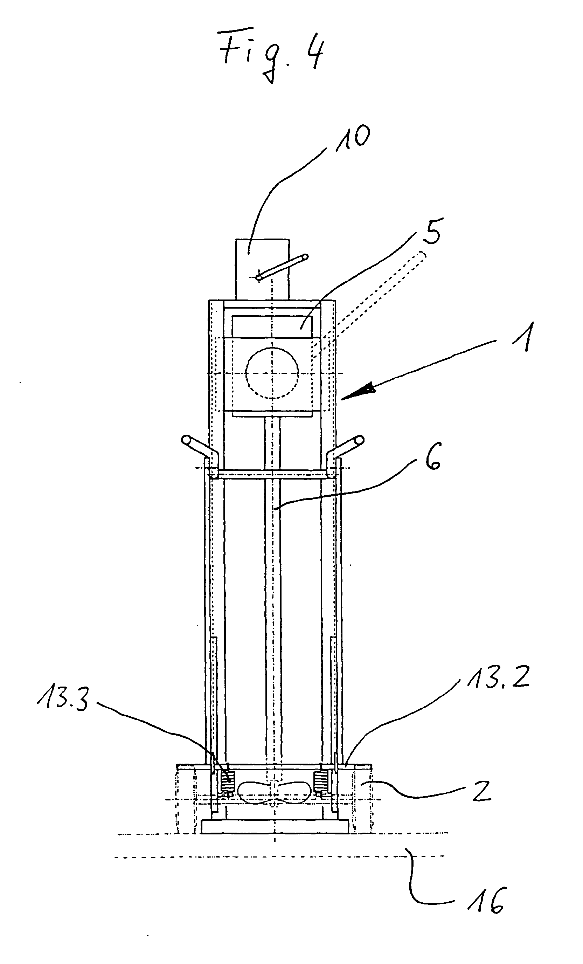

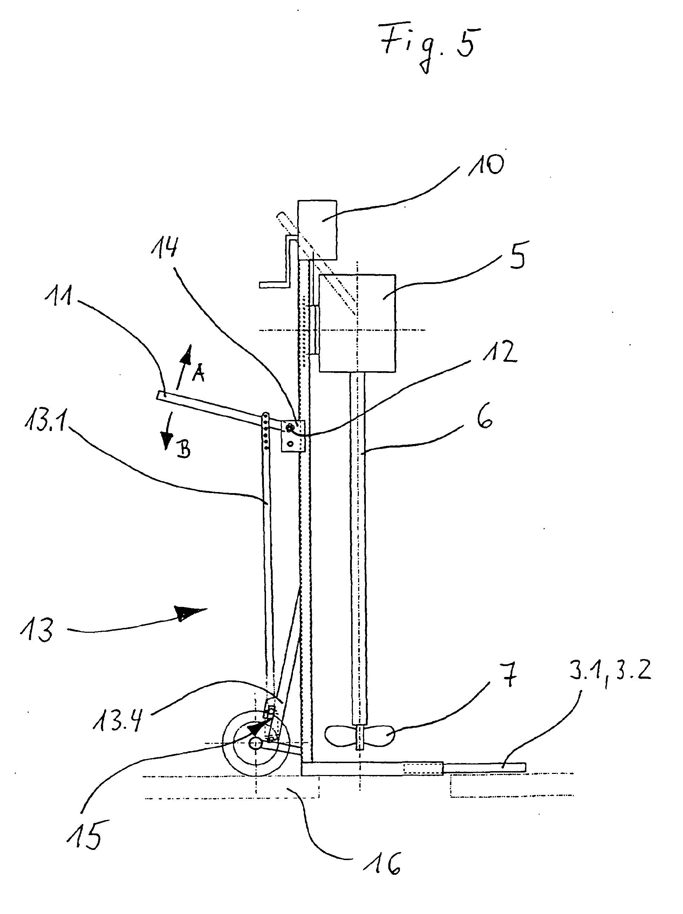

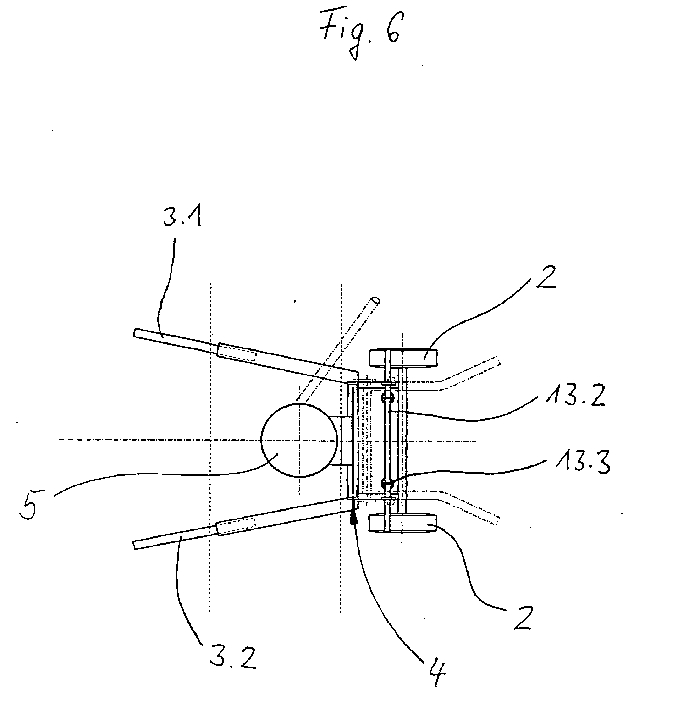

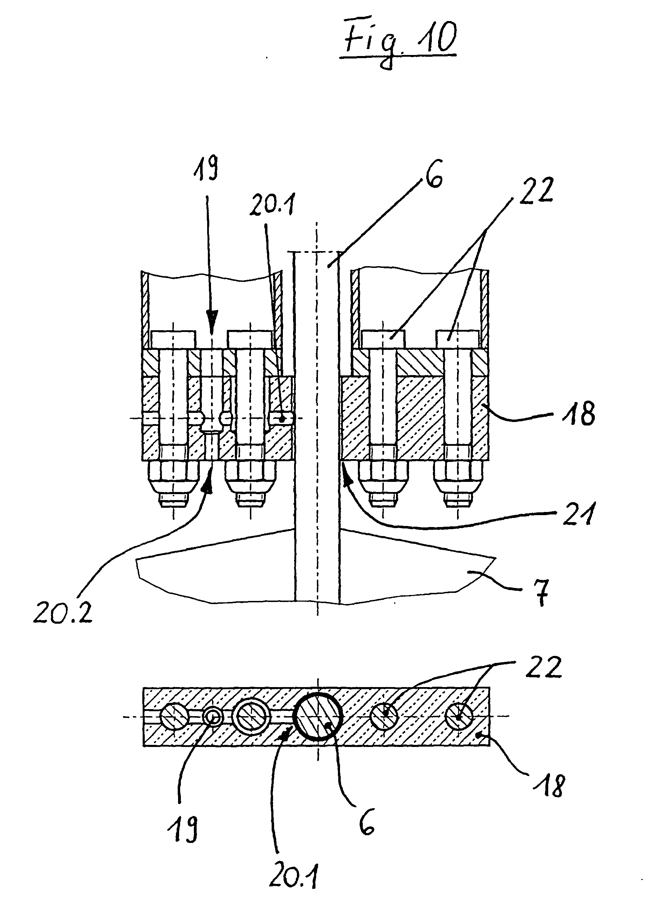

Bei der Ausführung in den Figuren 4 bis 6 sind die Handgriffe (11) teleskopierbar, höhenverstellbar und um eine Achse (12) schwenkbar. Ferner können sie in mehreren Stellungen festgelegt werden.
Hierzu werden die Handgriffe (11) jeweils in einer Manschette (14) schwenkbar aufgenommen, die der Höheneinstellung beziehungsweise den Schwenkstellungen entsprechende Bohrungen aufweisen können, wobei die Achse (12) aus einem Bolzen besteht, der die Bohrungen in der Manschette (14) sowie den Handgriff (11) durchgreift und endseitig eine Verliersicherung enthält. In die Manschette (14), wie sie aus der Figur 5 hervorgeht, sind zwei übereinander angeordnete Bohrungen eingebracht, sodaß die Handgriffe in zwei verschiedenen Positionen montiert werden können. Eine Festlegung der Handgriffe (11) in verschiedenen Schwenkstellungen ist bei der dargestellten Ausführung in Figur 5 nicht vorgesehen. Die Handgriffe (11) sind ferner mit einer auf die Räder (2) wirkenden, lösbaren Blockiereinrichtung (13) gekoppelt. Diese Blockiereinrichtung (13) ist eine Hebelmechanik, die eine mit den Handgriffen (11) gekoppelte Schubstange (13.1), eine radseitig an der Schubstange befestigte und auf die Räder (2) wirkende Bremsstange (13.2), wenigstens eine einerseits an der Bremsstange (13.2) und andererseits an dem Fahrgestell (1) befestigte Zugfeder (13.3) sowie eine Bremsstangenführung (13.4) aufweist.
Die Schubstange ist in mehreren Positionen in der Höhe verstellbar ausgeführt. Wie in der Darstellung der Figur 5 erkennbar, wird dies durch mehrere Bohrungen erreicht, die in die Schubstange eingebracht sind, wobei zu den Handgriffen (11) eine Bolzenverbindung geschaffen wird.
Eine weitere mögliche Höhenverstellung der Schubstange ist schematisch stark vereinfacht und ohne Anbauten in der Figur 9 gezeigt. Dabei ist an den Handgriffen ein Blech angesetzt, das mehrere Bohrungen aufweist, durch die ein Bolzen eine höhenverstellbare Verbindung mit der Schubstange gewährleistet.
Die Bremsstangenführung (13.4) enthält einen Schlitz (15), in dem die Bremsstange (13.2) gleitend beweglich geführt ist.

Bei einer Bewegung des Handgriffes (11) in Richtung des Pfeiles "A" in Figur 5 wird die Bremsstange von den Rädern abgehoben, diese sind dadurch freigegeben, und das Kleinrührwerk kann transportiert werden. Die Bremsstange (13.2) kommt dabei an einem oberen Anschlag innerhalb des Schlitzes (15) zur Anlage.

Bei einer Bewegung des Handgriffes (11) in Richtung des Pfeiles "B" in Figur 5 wird die Bremsstange (13.2) über die Schubstange (13.1) gegen die Räder (2) gedrückt. Die Räder sind damit blockiert. Die Federn (13.3) wirken unterstützend für die Blockierbewegung der Bremsstange. Sie sind dementsprechend als Zugfedern ausgeführt.

Eine an dem Fahrgestell (1) befestigte Hubvorrichtung (10) unterstützt die Verstellbewegung des Tragteiles (4).
Als Hubvorrichtung (10) wird bei den in den Figuren dargestellten Ausführungen jeweils eine Seilwinde verwendet.

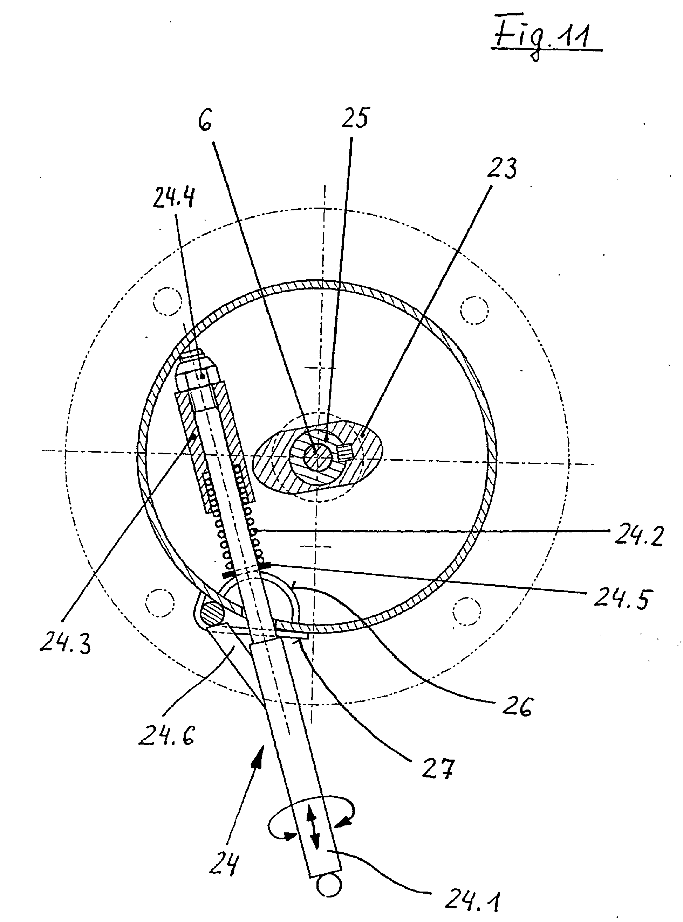

In der Figur 10 ist eine schwimmende Lagerung der Antriebswelle (6) dargestellt. Diese besteht aus einem Lagergehäuse (18) mit einem Spülmittelanschluß (19) und einem Spülmittelkanal (20). Als Spülmittel kann dabei beispielsweise Leitungswasser eingesetzt werden, das vom Wassernetz über den Spülmittelanschluß (19) direkt in die Lagerung geführt wird. Der Spülmittelkanal (20) weist wenigstens eine erste Austrittsöffnung (20.1) auf, die mit der Lagerbohrung (21) verbunden ist, welche die Antriebswelle (6) aufnimmt. Darüber hinaus unterteilt sich der Spülmittelkanal (20) in wenigstens eine weitere, freie, in Richtung des Rührflügels weisende Austrittsöffnung (20.2). Die Bolzen (22) dienen Montagezwecken und der Abdichtung nicht als Austrittsöffnung benötigter Bohrungen.

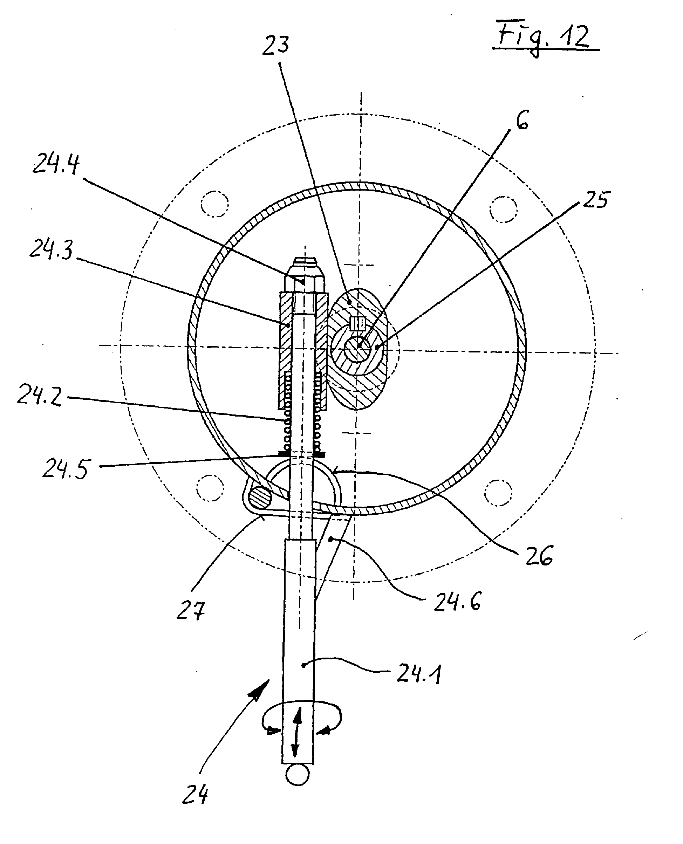

In den Figuren 11 und 12 sind zwei Stellungen einer Arretiervorrichtung gezeigt. Der Rührflügel (7) besteht vorliegend aus einem starr mit der Antriebswelle verbundenen Rührflügelblatt. Die Vorrichtung zur Arretierung des Rührflügels (7) verfügt über ein mit der Antriebswelle (6) gekoppeltes Nockenelement (23) und einen mit diesem zusammenwirkenden Arretierhebel (24). Das Nockenelement (23) ist mittels einer Reduzierhülse (25) auf der Antriebswelle befestigt und seine Längsausrichtung entspricht der des Rührflügels (7).
Der hier insgesamt drehbar und axial bewegliche Arretierhebel (24) besteht aus einem Handgriff (24.1), einer von dem Arretierhebel (24) durchsetzten Scheibe (24.5), einer sich einerseits gegen die Scheibe (24.5) und andererseits im Innern einer Hülse (24.3) abstützenden Feder (24.2), wobei die Hülse (24.3) mittels einer Sicherungsmutter (24.4) an dem Arretierhebel (24) festgelegt ist. An dem Arretierhebel (24) ist ferner ein Hebelarm (24.6) angebracht, der an einer Stützfläche (27) wenigstens zwei Stellungen des Arretierhebels (24) definiert.
Die Scheibe (24.5) gleitet bei Verstellung des Arretierhebls (24) entlang einer Kurvenbahn (26). Die Arretierung des Rührflügels kann während der Ruhestellung der Antriebswelle (6) durch einen geringfügigen Druck über den Arretierhebel (24) auf das Nockenelement (23) erreicht werden. Die ellipsenförmige Gestalt des Nockenelementes (23) unterstützt dabei die Ausrichtung des Rührflügels (7), welcher an der Antriebswelle (6) befestigt ist. Befindet sich die Antriebswelle (6) in der Endphase ihrer Rotationsbewegung, so kann über den Arretierhebel (24) ihr Stillstand bewirkt werden, wobei sich der Arretierhebel (24) dann achsparallel zu dem Rührflügel befindet und an der Längsseite des Nockenelementes (23) zur Anlage kommt.

### Bezugszeichenliste:

- 1: Fahrgestell
- 1.1: Rahmenprofil
- 1.1.1: Führung
- 1.2: Rahmenprofil
- 1.2.1: Führung
- 2: Rad
- 3.1: Stützholm
- 3.2: Stützholm
- 4: Tragteil
- 5: Antriebsaggregat
- 6: Antriebswelle
- 7: Rührflügel
- 8: Achse
- 9: Arretiervorrichtung
- 9.1: Platte
- 9.2: Kurvenkontur
- 9.3: Ausnehmung
- 9.4: Arretierglied
- 10: Hubvorrichtung
- 11: Handgriff
- 12: Achse
- 13: Blockiereinrichtung
- 13.1: Schubstange
- 13.2: Bremsstange
- 13.3: Feder
- 13.4: Bremsstangenführung
- 14: Manschette
- 15: Schlitz
- 16: Lattenrost
- 17: Verstellgriff
- 18: Lagergehäuse
- 19: Spülmittelanschluß

### Fortsetzung Bezugszeichenliste:

- 20: Spülmittelkanal
- 20.1: Austrittsöffnung
- 20.2: Austrittsöffnung
- 21: Lagerbohrung
- 22: Bolzen
- 23: Nockenelement
- 24: Arretierhebel
- 24.1: Handgriff
- 24.2: Feder
- 24.3: Hülse
- 24.4: Sicherungsmutter
- 24.5: Scheibe
- 24.6: Hebelarm
- 25: Reduzierhülse
- 26: Kurvenbahn
- 27: Stützfläche

## Patentansprüche

1. Transportables Kleinrührwerk zum Zerkleinern fester Bestandteile in Gülle und anderen Flüssigkeiten, bestehend aus:
- einem Fahrgestell (1) mit wenigstens zwei Rädern (2),
- einem Tragteil (4),
- einem auf dem Tragteil angeordneten Antriebsaggregat (5) mit einer Antriebswelle (6), die endseitig wenigstens einen Rührflügel (7) aufweist, wobei
- das Antriebsaggregat (5) um eine Achse (8) schwenkbar auf dem Tragteil (4) befestigt und
- das Antriebsaggregat (5) mittels einer Arretiervorrichtung (9) in mehreren Schwenkstellungen festlegbar auf dem Tragteil (4) angeordnet ist,
**dadurch gekennzeichnet, dass**
das Antriebsaggregat (5) mit dem Tragteil (4) verschiebbar in dem Fahrgestell (1) aufgenommen ist und der Schwenkwinkel der Arretiervorrichtung (9) 360° beträgt.

2. Transportables Kleinrührwerk nach Anspruch 1,
**dadurch gekennzeichnet, dass**
- das Fahrgestell (1) in sich geschlossen ist und wenigstens zwei zueinander parallele Rahmenprofile (1.1, 1.2) aufweist, die jeweils Führungen (1.1.1, 1.2.1) für das darin verschiebbare Tragteil (4) bilden und
- wenigstens zwei Stützholme (3.1, 3.2) auf der den Rädern gegenüberliegenden Seite angeordnet sind.

3. Transportables Kleinrührwerk nach Anspruch 1 oder 2,
**dadurch gekennzeichnet, dass**
die Arretiervorrichtung (9) aus einer auf dem Tragteil (4) drehbar befestigten Platte (9.1) besteht, in deren Randbereich eine Kurvenkontur (9.2) mit den Schwenkstellungen zugeordneten Ausnehmungen (9.3) eingeformt ist, in die ein Arretierglied (9.4) eingreift.

4. Transportables Kleinrührwerk nach Anspruch 3,
**dadurch gekennzeichnet, dass**
das Arretierglied (9.4) eine Feder-Kugel-Raste, ein Klemmhebel oder ein Gewindebolzen ist.

5. Transportables Kleinrührwerk nach einem der Ansprüche 2 bis 4,
**dadurch gekennzeichnet, dass**
die Stützholme (3.1, 3.2) teleskopierbar sind.

6. Transportables Kleinrührwerk nach einem der Ansprüche 2 bis 5,
**dadurch gekennzeichnet, dass**
die die Führungen (1.1.1 und 1.1.2) bildenden Rahmenprofile (1.1, 1.2) U-Profile, Schwalbenschwanzführungen, Schlitzführungen oder T-Profile sind.

7. Transportables Kleinrührwerk nach nach einem der vorhergehenden Ansprüche,
**dadurch gekennzeichnet, dass**
an dem Fahrgestell (1) wenigstens ein Handgriff (11) angebracht ist.

8. Transportables Kleinrührwerk nach einem der vorhergehenden Ansprüche,
**dadurch gekennzeichnet, dass**
an dem Fahrgestell (1) zwei Handgriffe (11) angebracht sind.

9. Transportables Kleinrührwerk nach Anspruch 8,
**dadurch gekennzeichnet, dass**
die Handgriffe (11) teleskopierbar sind.

10. Transportables Kleinrührwerk nach Anspruch 8 oder 9,
**dadurch gekennzeichnet, dass**
die höhenverstellbaren Handgriffe (11) um eine Achse (12) schwenkbar und in mehreren dieser Stellungen in dem Rahmenprofil (1.1, 1.2) festlegbar ausgeführt sind.

11. Transportables Kleinrührwerk nach Anspruch 10,
**dadurch gekennzeichnet, dass**
die Handgriffe (11) jeweils in einer Manschette (14) aus zwei parallelen Blechen schwenkbar aufgenommen sind, die der Höheneinstellung beziehungsweise den Schwenkstellungen entsprechende Bohrungen aufweist und dass die Achse (12) aus einem Bolzen besteht, der die Bohrungen in der Manschette (14) sowie den Handgriff (11) durchgreift und endseitig eine Verliersicherung aufweist.

12. Transportables Kleinrührwerk nach einem der Ansprüche 10 oder 11,
**dadurch gekennzeichnet, dass**
die Handgriffe (11) mit einer auf die Räder (2) wirkenden, lösbaren Blockiereinrichtung (13) gekoppelt sind.

13. Transportables Kleinrührwerk nach Anspruch 12,
**dadurch gekennzeichnet, dass**
die Blockiereinrichtung (13) eine Hebelmechanik ist, die eine mit den Handgriffen (11) gekoppelte Schubstange (13.1), eine radseitig an der Schubstange befestigte und auf die Räder (2) wirkende Bremsstange (13.2), wenigstens eine einerseits an der Bremsstange (13.2) und andererseits an dem Fahrgestell (1) befestigte Zugfeder (13.3) sowie eine Bremsstangenführung (13.4) aufweist.

14. Transportables Kleinrührwerk nach Anspruch 13,
**dadurch gekennzeichnet, dass**
die Bremsstangenführung (13.4) einen Schlitz (15) aufweist, in dem die Bremsstange (13.2) gleitend beweglich geführt ist.

15. Transportables Kleinrührwerk nach einem der vorhergehenden Ansprüche,
**dadurch gekennzeichnet, dass**
eine an dem Fahrgestell (1) befestigte Hubvorrichtung (10) mit dem Tragteil (4) zusammenwirkt.

16. Transportables Kleinrührwerk nach Anspruch 15,
**dadurch gekennzeichnet, dass**
die Hubvorrichtung (10) eine Seilwinde oder eine durch die Kraft einer Feder, durch eine Hydraulik oder durch eine Pneumatik unterstützte Hubmechanik ist.

17. Transportables Kleinrührwerk nach einem der vorhergehenden Ansprüche,
**dadurch gekennzeichnet, dass**
die Antriebswelle (6) schwimmend gelagert ist.

18. Transportables Kleinrührwerk nach Anspruch 17,
**dadurch gekennzeichnet, dass**
die schwimmende Lagerung aus einem Lagergehäuse (18) mit einem Spülmittelanschluß (19) und einem Spülmittelkanal (20) besteht.

19. Transportables Kleinrührwerk nach Anspruch 18,
**dadurch gekennzeichnet, dass**
der Spülmittelkanal (20) wenigstens eine mit der die Antriebswelle (6) aufnehmenden Lagerbohrung (21) verbundene Austrittsöffnung (20.1) und wenigstens eine freie, in Richtung des Rührflügels weisende, Austrittsöffnung (20.2) aufweist.

20. Transportables Kleinrührwerk nach einem der vorhergehenden Ansprüche,
**dadurch gekennzeichnet, dass**
der Rührflügel (7) aus mindestens einem starr mit der Antriebswelle verbundenen Rührflügelblatt besteht und an der Antriebswelle (6) eine Vorrichtung zur Arretierung des Rührflügels (7) in wenigstens einer Stellung vorhanden ist.

21. Transportables Kleinrührwerk nach Anspruch 20,
**dadurch gekennzeichnet, dass**
die Vorrichtung zur Arretierung des Rührflügels (7) aus einem mit der Antriebswelle (6) gekoppelten Nockenelement (23) und einem mit diesem zusammenwirkenden Arretierhebel (24) besteht.

22. Transportables Kleinrührwerk nach Anspruch 21,
**dadurch gekennzeichnet, dass**
das Nockenelement (23) mittels einer Reduzierhülse (25) auf der Antriebswelle befestigt ist.

23. Transportables Kleinrührwerk nach Anspruch 20 oder 21,
**dadurch gekennzeichnet, dass**
der insgesamt drehbar und axial bewegliche Arretierhebel (24) aus einem Handgriff (24.1), einer von dem Arretierhebel (24) durchsetzten Scheibe (24.5), einer sich einerseits gegen die Scheibe (24.5) und andererseits im Innern einer Hülse (24.3) abstützenden Feder (24.2) besteht, wobei die Hülse (24.3) mittels einer Sicherungsmutter (24.4) an dem Arretierhebel (24) festgelegt ist, wobei an dem Arretierhebel (24) ferner ein Hebelarm (24.6) angebracht ist, der an mindestens einer Stützfläche (27) wenigstens zwei Stellungen des Arretierhebels (24) definiert.

24. Transportables Kleinrührwerk nach Anspruch 23,
**dadurch gekennzeichnet, dass**
die Scheibe (24.5) bei Verstellung des Arretierhebls (24) entlang einer Kurvenbahn (26) gleitet.

## Claims

1. Portable small agitator for braking up solid elements in slurry and other fluids, comprising:
- a chassis (1) with at least two wheels (2),
- a support part (4),
- a drive unit (5) disposed on the support part, with a drive shaft (6) which has at least one agitator blade (7) at its end,
- which drive unit (5) is secured on the support part (4) so as to be pivotable about an axis (8) and
- the drive unit (5) is disposed on the support part (4) so that it can be locked in several pivot positions by means of a locking mechanism (9),
**characterised in that**
the drive unit (5) is accommodated in the chassis (1) so that it can be displaced with the support part (4) and the pivot angle of the locking mechanism (9) is 360°.

2. Portable small agitator as claimed in claim 1,
**characterised in that**
- the chassis (1) is intrinsically closed and has at least two mutually parallel frame sections (1.1, 1.2), which respectively form guides (1.1.1, 1.2.1) for the support part (4) displaceably mounted therein and
- at least two support spars (3.1, 3.2) are disposed at the side lying opposite the wheels.

3. Portable small agitator as claimed in claim 1 or 2,
**characterised in that**
the locking mechanism (9) comprises a plate (9.1) rotatably secured on the support part (4), in the peripheral region of which a cam contour (9.2) is provided with notches (9.3) corresponding to the pivot positions, in which a locking member (9.4) engages.

4. Portable small agitator as claimed in claim 3,
**characterised in that**
the locking member (9.4) is a spring and ball bearing catch, a clamping lever or a threaded bolt.

5. Portable small agitator as claimed in one of claims 2 to 4,
**characterised in that**
the support spars (3.1, 3.2) are of a telescopic design.

6. Portable small agitator as claimed in one of claims 2 to 5,
**characterised in that**
the frame sections (1.1, 1.2) forming the guides (1.1.1 and. 1.1.2) are U-sections, dovetail guides, slotted guides or T-sections.

7. Portable small agitator as claimed in one of the preceding claims, **characterised in that**
at least one handle (11) is mounted on the chassis (1).

8. Portable small agitator, as claimed in one of the preceding claims,
**characterised in that**
two handles (11) are mounted on the chassis (1).

9. Portable small agitator as claimed in claim 8,
**characterised in that**
the handles (11) are of a telescopic design.

10. Portable small agitator as claimed in claim 8 or 9,
**characterised in that**
the height-adjustable handles (11) are pivotable about an axis (12) and are designed so that they can be locked in the frame section (1.1, 1.2) in several of these positions.

11. Portable small agitator as claimed in claim 10,
**characterised in that**
the handles (11) are each pivotably mounted in a collar (14) comprising two parallel metal sheets which have bores corresponding to the height adjustment and the pivot positions, and the axis (12) is provided in the form of a bolt which extends through the bores in the collar (14) and the handle (11) and has a retaining lock at one end.

12. Portable small agitator as claimed in one of claims 10 or 11,
**characterised in that**
the handles (11) are coupled with a releasable blocking mechanism (13) acting on the wheels (2).

13. Portable small agitator as claimed in claim 12,
**characterised in that**
the blocking mechanism (13) is a lever mechanism, comprising a push rod (13.1) coupled with the handles (11), a brake rod (13.2) attached to the push rod at the wheel end and acting on the wheels (2), at least one tension spring (13.3) secured at one end to the brake rod (13.2) and at the other end to the chassis (1), as well as a brake rod guide (13.4).

14. Portable small agitator as claimed in claim 13,
**characterised in that**
the brake rod guide (13.4) has a slot (15), in which the brake rod (13.2) is guided in a sliding movement.

15. Portable small agitator as claimed in one of the preceding claims,
**characterised in that**
a lifting mechanism (10) secured to the chassis (1) cooperates with the support part (4).

16. Portable small agitator as claimed in claim 15,
**characterised in that**
the lifting mechanism (10) is a cable winch or a lifting mechanism assisted by the force of a spring, by a hydraulic system or by a pneumatic system.

17. Portable small agitator as claimed in one of the preceding claims,
**characterised in that**
the drive shaft (6) is mounted in a floating arrangement.

18. Portable small agitator as claimed in claim 17,
**characterised in that**
the floating bearing comprises a bearing housing (18) with a flushing medium connector (19) and a flushing medium passage (20).

19. Portable small agitator as claimed in claim 18,
**characterised in that**
the flushing medium passage (20) has at least one outlet orifice (20.1) connected to the bearing bore (21) accommodating the drive shaft (6) and at least one free outlet orifice (20.2) pointing in the direction of the agitator blade.

20. Portable small agitator as claimed in one of the preceding claims,
**characterised in that**
the agitator blade (7) consists of at least one agitator blade vane rigidly connected to the drive shaft and a device for locking the agitator blade (7) in at least one position is provided on the drive shaft (6).

21. Portable small agitator as claimed in claim 20,
**characterised in that**
the device for locking the agitator blade (7) consists of a cam element (23) coupled.with the drive shaft (6) and a locking lever (24) co-operating with it.

22. Portable small agitator as claimed in claim 21,
**characterised in that**
the cam element (23) is secured to the drive shaft by means of a reduction sleeve (25).

23. Portable small agitator a claimed in claim 20 or 21,
**characterised in that**
the locking lever (24), which is rotatable and axially displaceable as a whole, comprises a handle (24.1), a disc (24.5) through which the locking lever (24) extends, a spring (24.2) supported against the disc (24.5) at one end and in the interior of a sleeve (24.3) at the other end, which sleeve (24.3) is secured to the locking lever (24) by means of a lock nut (24.4), and a lever arm (24.6) is also mounted on the locking lever (24) which defines at least two positions of the locking lever (24) on at least one support surface (27).

24. Portable small agitator as claimed in claim 23,
**characterised in that**
when the locking lever (24) is displaced, the disc (24.5) slides along a cam track (26).

## Revendications

1. Petit dispositif d'agitation transportable pour broyer des éléments solides en lisier et.autres liquides, composé :
- d'un châssis (1) avec au moins deux roues (2),
- d'une partie porteuse (4),
- d'un mécanisme de commande (5) disposé sur la partie porteuse avec un arbre d'entraînement (6) qui comporte à son extrémité au moins une palette d'agitation (7), selon lequel
- le mécanisme de commande (5) est fixé sur la partie porteuse (4) autour d'un axe (8) de façon à pouvoir pivoter et
- le mécanisme de commande (5) est disposé sur la partie porteuse (4) de façon fixe au moyen d'un dispositif d'arrêt (9) dans plusieurs positions de justement,
**caractérisé en ce que**
le mécanisme de commande (5) est contenu dans le châssis (1) de façon à pouvoir être déplacé avec la partie porteuse (4) et l'angle de rotation du dispositif d'arrêt (9) est de 360°.

2. Petit dispositif d'agitation transportable selon la revendication 1, **caractérisé en ce que**
- le châssis (1) est fermé et comporte au moins deux profils de cadre (1.1, 1.2) parallèles l'un à l'autre qui forment respectivement des guides (1.1.1, 1.2.1) pour la partie porteuse (4) pouvant se déplacer dedans et
- au moins deux longerons de soutien (3.1, 3.2) sont disposés sur les côtés opposés aux roues.

3. Petit dispositif d'agitation transportable selon la revendication 1 ou 2, **caractérisé en ce que** le dispositif d'arrêt (9) se compose d'une plaque (9.1) pivotable fixée à la partie porteuse (4), dans la région des bords de laquelle un contour incurvé (9.2) est formé avec des évidements (9.3) affectés aux positions variables, évidements dans lesquels est engrené un élément d'arrêt (9.4).

4. Petit dispositif d'agitation transportable selon la revendication 3, **caractérisé en ce que** l'élément d'arrêt (9.4) est un cran d'arrêt à billes à ressort, un levier de blocage ou un boulon fileté.

5. Petit dispositif d'agitation transportable selon l'une quelconque des revendications 2 à 4, **caractérisé en ce que** les longerons de soutien (3.1, 3.2) sont télescopiques.

6. Petit dispositif d'agitation transportable selon l'une quelconque des revendications 2 à 5, **caractérisé en ce que** les profils de cadre (1.1, 1.2) formant les guides (1.1.1 et 1.1.2) sont des profils en U, des guides en queue d'aronde, des guidages à rainure ou des profils en T.

7. Petit dispositif d'agitation transportable selon l'une quelconque des revendications précédentes, **caractérisé en ce qu'**au moins un levier (11) est placé au niveau du châssis (1).

8. Petit dispositif d'agitation transportable selon l'une quelconque des revendications précédentes, **caractérisé en ce que** deux leviers (11) sont placés au niveau du châssis (1).

9. Petit dispositif d'agitation transportable selon la revendication 8, **caractérisé en ce que** les leviers (11) sont télescopiques.

10. Petit dispositif d'agitation transportable selon la revendication 8 ou 9, **caractérisé en ce que** les leviers (11) pouvant être déplacés en hauteur peuvent pivoter autour d'un axe (12) et sont actionnés de façon à pouvoir être fixés dans plusieurs de ces positions dans le profil de cadre (1.1, 1.2).

11. Petit dispositif d'agitation transportable selon la revendication 10, **caractérisé en ce que** les leviers (11) sont placés respectivement de façon à pivoter dans une manchette (14) à partir de deux tôles parallèles, laquelle comporte des alésages correspondants au réglage en hauteur ou aux positions de pivotement et **en ce que** l'axe (12) se compose d'une cheville qui engrène les alésages dans la manchette (14) ainsi que le levier (11) et comporte à son extrémité un dispositif de sécurité de perte.

12. Petit dispositif d'agitation transportable selon l'une quelconque des revendications 10 ou 11, **caractérisé en ce que** les leviers (11) sont couplés à un dispositif de blocage (13) amovible agissant sur les roues (2).

13. Petit dispositif d'agitation transportable selon la revendication 12, **caractérisé en ce que** le dispositif de blocage (13) est un mécanisme à levier qui comporte une bielle (13.1) couplée aux leviers (11), une tige de freinage (13.2)agissant sur les roues (2) et fixée du côté de la roue à la bielle, au moins un ressort de rappel (13.3) fixé d'une part à la tige de freinage (13.2) et d'autre part au châssis (1) ainsi qu'un guide de tige de freinage (13.4).

14. Petit dispositif d'agitation transportable selon la revendication 13, **caractérisé en ce que** le guide de tige de freinage (13.4) comporte une fente (15) dans laquelle la tige de freinage (13.2) est introduite de façon mobile à coulissement.

15. Petit dispositif d'agitation transportable selon l'une quelconque des revendications précédentes, **caractérisé en ce qu'**un mécanisme élévateur (10) fixé au châssis (1) agit conjointement avec la partie porteuse (4).

16. Petit dispositif d'agitation transportable selon la revendication 15, **caractérisé en ce que** le mécanisme élévateur (10) est un treuil de manoeuvre ou un dispositif de levage assisté par la force d'un ressort, ou par une installation hydraulique ou pneumatique.

17. Petit dispositif d'agitation transportable selon l'une quelconque des revendications précédentes, **caractérisé en ce que** l'arbre d'entraînement (6) est flottant.

18. Petit dispositif d'agitation transportable selon la revendication 17, **caractérisé en ce que** le palier flottant se compose d'un logement de palier (18) avec un raccord de produit de rinçage (19) et un canal de produit de rinçage (20).

19. Petit dispositif d'agitation transportable selon la revendication 18, **caractérisé en ce que** le canal de produit de rinçage (20) comporte au moins un orifice de sortie (20.1) relié à l'alésage de palier (21) engrené avec l'arbre d'entraînement (6) et au moins un orifice de sortie (20.2) libre orienté dans le sens de la palette d'agitation.

20. Petit dispositif d'agitation transportable selon l'une quelconque des revendications précédentes, **caractérisé en ce que** la palette d'agitation (7) se compose au moins d'une feuille de palette d'agitation reliée de façon rigide à l'arbre d'entraînement et **en ce qu'**un dispositif d'arrêt de la palette d'agitation (7) est présent au niveau de l'arbre d'entraînement (6) dans au moins une position.

21. Petit dispositif d'agitation transportable selon la revendication 20, **caractérisé en ce que** le dispositif de blocage de la palette d'agitation (7) se compose d'une butée (23) couplée à l'arbre d'entraînement (6) et d'un levier de blocage (24) agissant conjointement avec celui-ci.

22. Petit dispositif d'agitation transportable selon la revendication 21, **caractérisé en ce que** la butée (23) est fixée à l'arbre d'entraînement au moyen d'une douille de réduction (25).

23. Petit dispositif d'agitation transportable selon la revendication 20 ou 21, **caractérisé en ce que** le levier de blocage (24) mobile de façon axiale et entièrement rotatif se compose d'un levier (24.1), d'un disque (24.5) traversé par le levier de blocage (24), d'un ressort (24.2) appuyé d'une part contre le disque (24.5) et d'autre part à l'intérieur d'une douille (24.3), moyennant quoi la douille (24.3) est fixée au levier de blocage (24) au moyen d'un écrou de blocage (24.4), moyennant quoi un bras de levier (24.6) est ajouté au levier de blocage (24), bras qui définit au moins deux positions du levier de blocage (24) au niveau au moins d'une surface d'appui (27).

24. Petit dispositif d'agitation transportable selon la revendication 23, **caractérisé en ce que** le disque (24.5) glisse le long d'un rail incurvé (26) lors du réglage du levier de blocage (24).
